# EUROPÄISCHE PATENTSCHRIFT

(11) **EP 2 622 668 B1**
(45) Veröffentlichungstag und Bekanntmachung des Hinweises auf die Patenterteilung: **15.01.2020**
(21) Anmeldenummer: 11746217.6
(22) Anmeldetag: 09.08.2011
(51) Int. Cl.: H01M 2/02, H01M 2/10, H01M 10/0525

(54) **VERFAHREN ZUM VERSPANNEN EINES LITHIUM-IONEN-AKKUMULATORS, EIN LITHIUM IONEN AKKUMULATOR SOWIE EIN KRAFTFAHRZEUG MIT EINEM LITHIUM IONEN AKKUMULATOR**
METHOD FOR CLAMPING A LITHIUM ION ACCUMULATOR, LITHIUM ION ACCUMULATOR AND MOTOR VEHICLE HAVING A LITHIUM ION ACCUMULATOR
PROCÉDÉ DE SERRAGE D'UN ACCUMULATEUR AU LITHIUM-ION, ACCUMULATEUR AU LITHIUM-ION ET VÉHICULE AUTOMOBILE ÉQUIPÉ D'UN ACCUMULATEUR AU LITHIUM-ION

(30) Priorität: 30.09.2010 DE 102010041709
(43) Veröffentlichungstag der Anmeldung: 07.08.2013
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: PFEIFFER, Stefan, 96052 Bamberg (DE); GLESS, Michael, 70437 Stuttgart-Zazenhausen (DE); BORMANN, Axel, 96049 Bamberg (DE); BUBECK, Conrad, 73728 Esslingen (DE)
(74) Vertreter: Bee, Joachim
(86) Internationale Anmeldenummer: PCT/EP2011/063662
(87) Internationale Veröffentlichungsnummer: WO 2012/041588

(56) Entgegenhaltungen:
- EP-A1- 1 990 861
- JP-A- 2008 277 085
- US-A- 4 020 244

## Beschreibung

Die vorliegende Erfindung betrifft ein Verfahren zum Verspannen eines Lithium-Ionen-Akkumulators, der einen Lithium-Ionen-Akkumulatorzellenstapel mit einer Deckfläche, einer der Deckfläche gegenüberliegenden Grundfläche sowie einer Mantelfläche mit vier Seitenflächen aus mindestens zwei prismatischen Lithium-Ionen-Akkumulatorzellen aufweist, einen Lithium-Ionen-Akkumulator sowie ein Kraftfahrzeug mit einem elektrischen Antriebsmotor zum Antreiben des Kraftfahrzeugs und einem mit dem elektrischen Antriebsmotor verbundenen oder verbindbaren Lithium-Ionen-Akkumulator.

### Stand der Technik

Lithium-Ionen-Akkumulatorzellen dehnen sich bei Betrieb und der so genannten Formation aus. Laut D.P. Wilkinson, Effects of physical constraints an Li cyclability, Journal of Power sources 36, 1991, Seite 517 bis 527, wird die Morphologie des Lithiums in einer Lithium-Ionen-Akkumulatorzelle schon nach wenigen Lade-Entlade-Zyklen porös, wenn zu wenig Druck (p < 0,1 MPa) auf die Lithium-Ionen-Akkumulatorzelle ausgeübt wird, so dass sie nach wenigen Lade-Entlade-Zyklen versagt. Um eine optimale Leistung und eine lange Lebensdauer von Lithium-Ionen-Akkumulatorzellen zu erreichen, wird also ein definierter Druck, der auf diese einwirkt, benötigt.

Herkömmliche Vorspannkonzepte, die diesen Druck aufbauen können, sind jedoch unflexibel, teuer und sehr raumgreifend.

Die EP 1990 861 A1 beschreibt einen Batteriepack, der an beiden Enden eine Platte besitzt, an denen Metallbügel zum Fixieren des Batteriepacks festlegbar sind. Vor dem Fixieren mittels der Metallbügel wird der Batteriepack komprimiert.

Aus der JP 2008277085 A ist ein Batteriepack bekannt, bei dem die einzelnen Batteriezellen, zwischen denen Abstandshalter angeordnet sind, mit einem Band, das über die gesamte Länge über Durchbrechungen verfügt, miteinander fixiert sind. Zweck dieser Ausgestaltung ist eine ausreichende Lüftung, um Überhitzungen im Betrieb zu vermeiden.

Ein ähnlich aufgebauter Batteriepack wird in der US 4,020,244 offenbart, jedoch sind bei diesem Batteriepack Stahlbänder zum Verschließen vorgesehen, deren Enden miteinander verschweißt sind.

### Offenbarung der Erfindung

Die Erfindung gibt ein Verfahren zum Verspannen eines Lithium-Ionen-Akkumulators, der einen Lithium-Ionen-Akkumulatorzellenstapel aufweist, an. Der zu verspannende Lithium-Ionen-Akkumulatorzellenstapel besitzt eine Deckfläche, eine der Deckfläche gegenüberliegende Grundfläche sowie eine Mantelfläche mit vier Seitenflächen, wobei auf der Deckfläche vorzugsweise die Anschlüsse der Lithium-Ionen-Akkumulatorzellen angeordnet sind.

Für den Lithium-Ionen-Akkumulatorzellenstapel werden mindestens zwei, vorzugsweise sechs prismatische Lithium-Ionen-Akkumulatorzellen verwendet.

Das Verspannen des Lithium-Ionen-Akkumulatorzellenstapels erfolgt mittels mindestens eines Zugbandes, das im Bereich der Mantelfläche angeordnet und gespannt wird.

Das Spannen des mindestens einen Zugbandes erfolgt derart, dass die Enden des Zugbandes währenddessen in spannungsfreiem Zustand gehalten werden und in diesem Zustand die Enden des Bandes direkt oder indirekt unter Verwendung von einer oder zwei Platten, die auf einer Seitenfläche bzw. zwei einander gegenüberliegenden Seitenflächen der Mantelfläche angeordnet werden, miteinander verbunden werden.

Um die Enden des Zugbandes während des Spannens spannungsfrei zu halten, weisen diese jeweils eine Durchgangsöffnung auf, in die eine Vorrichtung eingreift und das Zugband spannt, so dass vorteilhafterweise der Bereich zwischen Durchgangsöffnung und Ende des Zugbandes spannungsfrei verbleibt.

Es sind daher drei Verfahrensvarianten gegeben. Bei der ersten Variante wird um den Zellenstapel im Bereich der Mantelfläche mindestens ein Zugband geführt und gespannt, wobei die Enden des Bandes in spannungsfreiem Zustand gehalten und in diesem Zustand die Enden des Bandes miteinander verbunden werden. Bei der zweiten Variante wird auf einer Seitenfläche der Mantelfläche eine Platte angeordnet, wobei über die freien Seitenflächen mindestens ein Band geführt und gespannt wird und wobei die Enden des Bandes in spannungsfreiem Zustand gehalten und in diesem Zustand die Enden des Bandes mit der Platte verbunden werden. Für die dritte Variante wird auf zwei einander gegenüberliegenden Seitenflächen der Mantelfläche jeweils eine Platte angeordnet, wobei über die freien einander gegenüberliegenden Seitenflächen mindestens jeweils ein Band geführt und gespannt wird und wobei die Enden des Bandes in spannungsfreiem Zustand gehalten und in diesem Zustand die Enden der Bänder mit jeweils einer der beiden Platten verbunden werden.

Letztendlich soll nach Durchführung des Verfahrens die Verspannung einen definierten Wert aufweisen, so dass das mindestens eine Zugband auf die zusammengeschnürten Lithium-Ionen-Akkumulatorzellen eine Druckkraft von vorzugsweise 0,01 MPa bis 2 MPa, besonders bevorzugt von 0,6 MPa bis 0,8 MPa ausübt.

Dieses Vorgehen hat den Vorteil, dass das mindestens eine Zugband auch nach dem Verbinden eine definierte Zugspannung aufweist, die für einen optimalen Betrieb des Lithium-Ionen-Akkumulators notwendig ist.

Vorzugsweise wird der Lithium-Ionen-Akkumulatorzellenstapel zusätzlich noch vor oder während des Spannens des mindestens einen Zugbandes komprimiert, was wiederum das Einhalten einer definierten Zugspannung verbessert.

Die direkte oder indirekte Verbindung der freien Enden des mindestens einen Zugbandes erfolgt mittels einer Schweißverbindung, einer Schraubverbindung oder einer Klemmverbindung, wobei eine Schweißverbindung bevorzugt wird, da hierbei die mechanische Belastung der Enden des Zugbandes am geringsten und die erforderliche Zugspannung genau einstellbar ist.

Da ein Zugband viel weniger Platz braucht als eine Schraube oder ähnliche Bauteile, kann durch das Verspannen eines Lithium-Ionen-Akkumulatorzellenstapels mit einem Zugband die Verspannung der Lithium-Ionen-Akkumulatorzellen auf minimalen Raum stattfinden. Dadurch kann die Energiedichte des Lithium-Ionen-Akkumulators erhöht werden, da nun mehr Platz für die einzelnen Lithium-Ionen-Akkumulatorzellen zur Verfügung steht.

Auch ist ein Zugband als Meterware im Vergleich zu Stückware wie Schrauben oder ähnlichen Bauteilen günstiger. Ferner kann der Aufbau eines einzelnen Lithium-Ionen-Akkumulators sehr flexibel erfolgen, da die einzelnen Lithium-Ionen-Akkumulatorzellen des Stapels unabhängig vom Gehäuse verspannt werden können. Dies erlaubt es auch, einzelne Lithium-Ionen-Akkumulatorzellen aus dem Stapel problemlos auszutauschen. Schließlich ist die Konstruktion eines Lithium-Ionen-Akkumulators völlig unabhängig vom Verbindungsmittel, da das Zugband theoretisch endlos lang vertrieben und erst vor Ort auf die benötigte Länge zurechtgeschnitten und mit Durchgangsöffnungen versehen werden kann, um so beliebig viele Lithium-Ionen-Akkumulatorzellen miteinander zu verbinden. Auch die Lithium-Ionen-Akkumulatorzellen selbst können so beliebig großen Toleranzen unterworfen werden, so dass auch größere und dickere Lithium-Ionen-Akkumulatorzellen, wie beispielsweise für Antriebsakkumulatoren eines Elektrofahrzeuges, verspannt werden können.

Das Zugband kann bevorzugterweise ganz oder teilweise durchbrochen ausgestaltet sein, um die Flexibilität und sonstigen mechanischen Eigenschaften des Zugbandes zu modifizieren.

Es wird erfindungsgemäß auch ein Lithium-Ionen-Akkumulator bereitgestellt, der einen Lithium-Ionen-Akkumulatorzellenstapel mit einer Deckfläche, einer der Deckfläche gegenüberliegenden Grundfläche sowie einer Mantelfläche mit vier Seitenflächen aus mindestens zwei prismatischen

Lithium-Ionen-Akkumulatorzellen aufweist, wobei im Bereich der Mantelfläche mindestens ein gespanntes Zugband angeordnet ist, dessen Enden mittels einer oder zwei Platten, die auf einer Seitenfläche bzw. zwei einander gegenüberliegenden Seitenflächen der Mantelfläche angeordnet sind, miteinander verbunden sind, wobei an einer freien Seitenfläche keine Platte angeordnet ist, wobei im Bereich der Enden des mindestens einen Zugbandes jeweils eine Durchgangsöffnung befindlich ist und wobei die jeweils eine Durchgangsöffnung des mindestens einen Zugbandes an einem zu einem freien Ende benachbarten Abschnitt des mindestens einen Zugbandes angeordnet ist. Es sind Pfaffen, das heißt Abstandshalter zwischen dem Zugband, zumindest an der Verbindungsstelle und der Mantelfläche angeordnet, um beim Verbinden der Enden des Zugbandes die Lithium-Ionen-Akkumulatorzellen nicht zu beschädigen.

Die Ausführungen hinsichtlich des Verfahrens betreffen natürlich sinngemäß auch die Ausgestaltung des Lithium-Ionen-Akkumulators und umgekehrt.

Bei der indirekten Verbindung der Enden des Zugbandes mittels einer oder auch zwei Platten werden die Enden des Zugbandes möglichst großflächig mit den Platten verbunden, um eine belastbare Verbindung zu erhalten.

Für diese Technik werden erfindungsgemäß bevorzugt Stahlbänder verwendet, da diese Bänder sehr hohe Kräfte aufnehmen können. Diese Kräfte werden beispielsweise zum Verspannen von Zellen eines Lithium-Ionen-Akkumulators benötigt, um eine ausreichend hohe Lebensdauer des Akkumulators zu gewährleisten.

Flache Zugbänder können die Kraft über eine große Fläche gleichmäßig auf die Lithium-Ionen-Akkumulatorzellen übertragen.

In einer bevorzugten Ausführungsform der Erfindung kann um die Mantelfläche des Lithium-Ionen-Akkumulatorzellenstapels wenigstens ein zweites Zugband gespannt werden.

Gegenstand der Erfindung ist zudem ein Kraftfahrzeug mit einem elektrischen Antriebsmotor zum Antreiben des Kraftfahrzeugs und einem mit dem elektrischen Antriebsmotor verbundenen oder verbindbaren erfindungsgemäßen Lithium-Ionen-Äkkumulator.

Die Unteransprüche zeigen bevorzugte Weiterbildungen der Erfindung.

Durch die Erfindung ist es vorteilhafterweise möglich, einen Lithium-Ionen-Akkumulatorzellenstapel aus prismatischen Lithium-Ionen-Akkumulatorzellen bereitzustellen, bei dem die Lithium-Ionen-Akkumulatorzellen mit hohem Druck, flexibel und preisgünstig verspannt werden können.

### Zeichnungen

Ausführungsbeispiele der Erfindung werden anhand der Zeichnungen und der nachfolgenden Beschreibung näher erläutert. Es zeigen:
Figur 1 in einer Aufsicht einen Lithium-Ionen-Akkumulator mit an gegenüberliegenden Seitenflächen des Lithium-Ionen-Akkumulators angeordneten Platten,
Figur 2 in einer Aufsicht einen Lithium-Ionen-Akkumulator mit an gegenüberliegenden Seitenflächen des Lithium-Ionen-Akkumulators angeordneten Platten nach einer anderen Ausführungsform,
Figur 3 in einer Seitenansicht einen Lithium-Ionen-Akkumulator mit an gegenüberliegenden Seitenflächen des Lithium-Ionen-Akkumulators angeordneten Platten gemäß Figur 2, und
Figur 4 in einer Seitenansicht einen Lithium-Ionen-Akkumulator mit an gegenüberliegenden Seitenflächen des Lithium-Ionen-Akkumulators angeordneten Platten gemäß Figur 2, wobei die Zugbänder Durchbrechungen aufweisen.

### Ausführungsformen der Erfindung

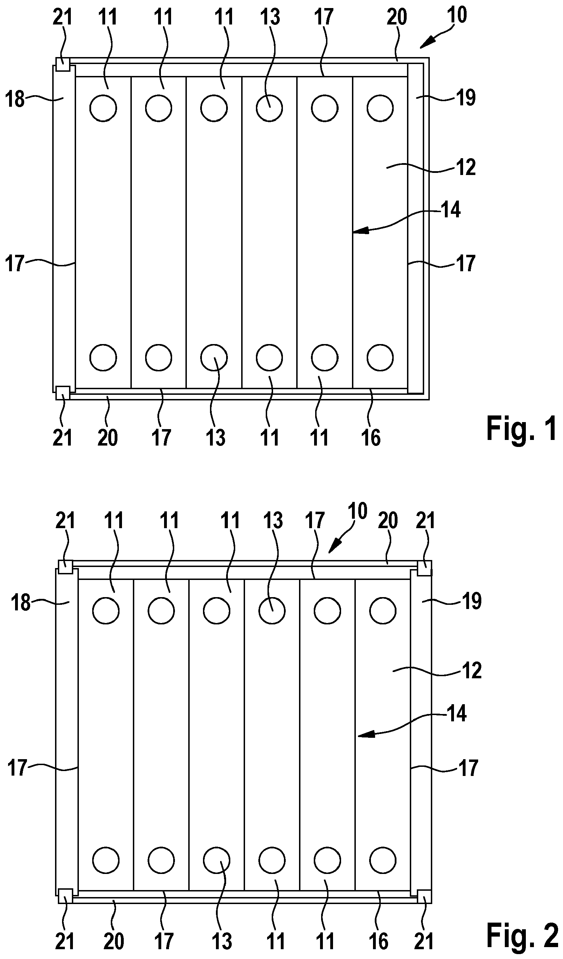

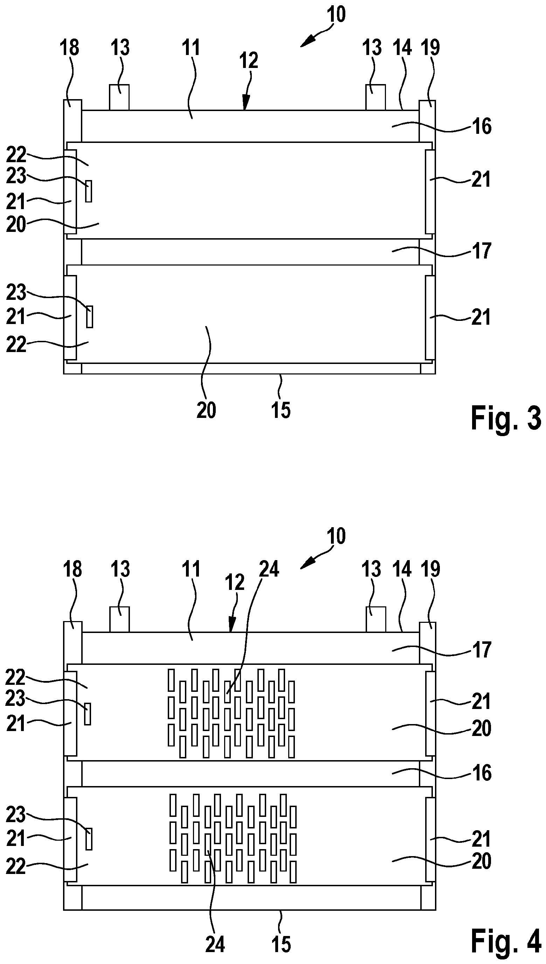

In den Figuren 1 bis 4 ist jeweils ein Lithium-Ionen-Akkumulator 10 gezeigt mit sechs Lithium-Ionen-Akkumulatorzellen 11, die zu einem Stapel 12 zusammengefügt sind. Die Anschlüsse 13 der Lithium-Ionen-Akkumulatorzellen 11 sind auf der Deckfläche 14 des Lithium-Ionen-Akkumulators 10 angeordnet. Der Lithium-Ionen-Akkumulator 10 besitzt zudem eine Grundfläche 15 sowie eine Mantelfläche 16, die wiederum vier Seitenflächen 17 aufweist. An zwei einander gegenüberliegenden Seitenflächen 17 ist jeweils eine Platte 18, 19 angeordnet, die beim Verspannen den Druck auf die Lithium-Ionen-Akkumulatorzellen 11 gleichmäßig verteilt. Zum Verspannen sind Zugbänder 20 vorgesehen, wobei auf der Mantelfläche 16 jeweils zwei Zugbänder 20 nebeneinander angeordnet sind, wodurch eine gleichmäßigere Kraftverteilung als bei nur einem Zugband erreicht wird. Bei der Ausführungsform gemäß Figur 1 wird das jeweilige Zugband 20 an einer Platte 18 mittels einer Schweißnaht 21 festgelegt und um die zweite Platte 19 auf der gegenüberliegenden Seitenfläche 17 herumgeführt und an der ersten Platte 18 wiederum mit einer zweiten Schweißnaht 21 fest verbunden. Hingegen werden bei der Ausführungsform gemäß den Figuren 2 bis 4 die Zugbänder 20 jeweils an den beiden Platten 18, 19 an den gegenüberliegenden Seiten 17 mit einer Schweißnaht 21 festgelegt. Um die Zugbänder 20 spannen und deren Enden 22 im spannungsfreien Zustand verschweißen zu können, weisen diese eine Durchgangsöffnung 23 auf, in die eine Vorrichtung zum Spannen eingreifen kann. In Figur 4 weisen die Zugbänder 20 zudem Durchbrechungen 24 auf, mit denen die mechanischen Eigenschaften der Zugbänder 20 variiert werden können.

## Patentansprüche

1. Ein Verfahren zum Verspannen eines Lithium-Ionen-Akkumulators (10), der einen Lithium-Ionen-Akkumulatorzellenstapel (12) mit einer Deckfläche (14), einer der Deckfläche (14) gegenüberliegenden Grundfläche (15) sowie einer Mantelfläche (16) mit vier Seitenflächen (17) aus mindestens zwei prismatischen Lithium-Ionen-Akkumulatorzellen (11) aufweist, **dadurch gekennzeichnet, dass** das Verspannen des Lithium-Ionen-Akkumulatorzellenstapels (12) mittels mindestens eines Zugbandes (20), das im Bereich der Mantelfläche (16) angeordnet und gespannt wird, erfolgt, wobei die Enden (22) des Zugbandes (20) eine Durchgangsöffnung (23) aufweisen, in die eine Vorrichtung eingreift und das Zugband (20) spannt, so dass jeweils der Bereich zwischen Durchgangsöffnung (23) und Ende (22) des Zugbandes (20) spannungsfrei verbleibt, und dass in spannungsfreiem Zustand die Enden (22) des Zugbandes (20) direkt oder indirekt unter Verwendung von einer oder zwei Platten (18, 19), die auf einer Seitenfläche (17) bzw. zwei einander gegenüberliegenden Seitenflächen (17) der Mantelfläche (16) angeordnet werden, miteinander verbunden werden.

2. Das Verfahren nach Anspruch 1, wobei der Lithium-Ionen-Akkumulatorzellenstapel (12) vor oder während des Spannens des mindestens einen Zugbandes (20) komprimiert wird.

3. Das Verfahren nach Anspruch 1 oder 2, wobei die direkte oder indirekte Verbindung der freien Enden (22) des mindestens einen Zugbandes (20) mittels einer Schweißverbindung (21), einer Schraubverbindung oder einer Klemmverbindung hergestellt wird.

4. Ein Lithium-Ionen-Akkumulator, der einen Lithium-Ionen-Akkumulatorzellenstapel (12) mit einer Deckfläche (14) einer der Deckfläche (14) gegenüberliegenden Grundfläche (15) sowie einer Mantelfläche (16) mit vier Seitenflächen (17) aus mindestens zwei prismatischen Lithium-Ionen-Akkumulatorzellen (11) aufweist, wobei im Bereich der Mantelfläche (16) mindestens ein gespanntes Zugband (20) angeordnet ist, dessen Enden (22) mittels einer oder zwei Platten (18, 19), die auf einer Seitenfläche (17) bzw. zwei einander gegenüberliegenden Seitenflächen (17) der Mantelfläche (16) angeordnet sind, miteinander verbunden sind, wobei an einer freien Seitenfläche (17) keine Platte (18, 19) angeordnet ist, wobei im Bereich der Enden (22) des mindestens einen Zugbandes (20) jeweils eine Durchgangsöffnung (23) befindlich ist, **dadurch gekennzeichnet, dass** die jeweils eine Durchgangsöffnung (23) des mindestens einen Zugbandes (20) an einem zu einer freien Oberfläche (17) benachbarten Abschnitt des mindestens einen Zugbandes (20) angeordnet ist.

5. Der Lithium-Ionen-Akkumulator nach Anspruch 4, bei dem die Verbindung der Enden (22) des Zugbandes (20) eine Schweißverbindung (21), eine Schraubverbindung oder eine Klemmverbindung ist.

6. Der Lithium-Ionen-Akkumulator nach Anspruch 4 oder 5, wobei Pfaffen das mindestens eine Zugband (20) wenigstens an der Verbindungsstelle von der Mantelfläche (16) des Akkumulatorstapels (12) abheben.

7. Der Lithium-Ionen-Akkumulator nach Anspruch 5 oder 6, wobei das Zugband (20) wenigstens an seinen Enden (22) mit der Platte (18, 19) oder den Platten (18, 19) verbunden ist.

8. Der Lithium-Ionen-Akkumulator nach einem der Ansprüche 5 bis 8, wobei der Lithium-Ionen-Akkumulatorzellenstapel (12) sechs Lithium-Ionen-Akkumulatorzellen (11) aufweist.

9. Ein Kraftfahrzeug mit einem elektrischen Antriebsmotor zum Antreiben des Kraftfahrzeugs und einem mit dem elektrischen Antriebsmotor verbundenen oder verbindbaren Lithium-Ionen-Akkumulator (10) gemäß einem der Ansprüche 4 bis 8.

## Claims

1. Method for clamping a lithium ion accumulator (10) which has a lithium ion accumulator cell stack (12) having a top surface (14), a base surface (15) opposite the top surface (14) and a circumferential surface (16) having four side surfaces (17), and consisting of at least two prismatic lithium ion accumulator cells (11), **characterized in that** the lithium ion accumulator cell stack (12) is clamped by means of at least one tension strap (20) which is arranged and tensioned in the region of the circumferential surface (16), wherein the ends (22) of the tension strap (20) have a passage opening (23) in which a device engages and tensions the tension strap (20) such that in each case the region between the passage opening (23) and the end (22) of the tension strap (20) remains free of tension, and **in that**, in the tension-free state, the ends (22) of the tension strap (20) are connected to each other directly or indirectly using one or two plates (18, 19) which are arranged on one side surface (17) or two mutually opposite side surfaces (17) of the circumferential surface (16).

2. Method according to Claim 1, wherein the lithium ion accumulator cell stack (12) is compressed before or during the tensioning of the at least one tension strap (20).

3. Method according to Claim 1 or 2, wherein the direct or indirect connection of the free ends (22) of the at least one tension strap (20) is produced by means of a welded joint (21), a screw connection or a clamping connection.

4. Lithium ion accumulator which has a lithium ion accumulator cell stack (12) having a top surface (14), a base surface (15) opposite the top surface (14) and a circumferential surface (16) having four side surfaces (17), and consisting of two prismatic lithium ion accumulator cells (11), wherein at least one tensioned tension strap (20) is arranged in the region of the circumferential surface (16), the ends (22) of said tension strap being connected to each other by means of one or two plates (18, 19) which are arranged on one side surface (17) or two mutually opposite side surfaces (17) of the circumferential surface (16), wherein no plate (18, 19) is arranged on a free side surface (17), wherein a passage opening (23) is located in the region of each of the ends (22) of the at least one tension strap (20), **characterized in that** the in each case one passage opening (23) in the at least one tension strap (20) is arranged on a section of the at least one tension strap (20) that is adjacent to a free surface (17).

5. Lithium ion accumulator according to Claim 4, in which the connection of the ends (22) of the tension strap (20) is a welded joint (21), a screw connection or a clamping connection.

6. Lithium ion accumulator according to Claim 4 or 5, wherein hobs lift the at least one tension strap (20) from the circumferential surface (16) of the accumulator stack (12) at least at the connecting point.

7. Lithium ion accumulator according to Claim 5 or 6, wherein the tension strap (20) is connected at least at the ends (22) thereof to the plate (18, 19) or the plates (18, 19).

8. Lithium ion accumulator according to one of Claims 5 to 8, wherein the lithium ion accumulator cell stack (12) has six lithium ion accumulator cells (11).

9. Motor vehicle having an electric drive motor for driving the motor vehicle and a lithium ion accumulator (10) which is connected or is connectable to the electric drive motor, according to one of Claims 4 to 8.

## Revendications

1. Procédé de serrage d'un accumulateur au lithium-ion (10) qui comprend un empilement (12) d'éléments accumulateurs au lithium-ion comportant une surface de couverture (14), une surface de base (15) opposée à la surface de couverture (14) ainsi qu'une surface enveloppante (16) ayant quatre surfaces latérales (17) composées d'au moins deux éléments accumulateurs au lithium-ion (11) de forme prismatique,
**caractérisé en ce que** le serrage de l'empilement (12) d'éléments accumulateurs au lithium-ion est effectué au moyen d'au moins une bande de traction (20) qui est placée et serrée dans la zone de la surface enveloppante (16), dans lequel les extrémités (22) de la bande de traction (20) présentent une ouverture traversante (23) dans laquelle un dispositif s'engage et serre la bande de traction (20), de telle manière que la zone respectivement comprise entre l'ouverture traversante (23) et l'extrémité (22) de la bande de traction (20) reste exempte de serrage, et **en ce que**, à l'état non serré, les extrémités (22) de la bande de traction (20) sont reliées ensemble,.directement ou indirectement, à l'aide d'une ou deux plaques (18, 19) qui sont respectivement disposées sur une surface latérale (17) ou sur deux surfaces latérales (17) opposées de la surface enveloppante (16).

2. Procédé selon la revendication 1, dans lequel empilement (12) d'éléments accumulateurs au lithium-ion est comprimé avant ou pendant le serrage de ladite au moins une bande de traction (20).

3. Procédé selon la revendication 1 ou 2, dans lequel la liaison directe ou indirecte des extrémités libres (22) de ladite au moins une bande de traction (20) est réalisée au moyen d'une liaison soudée (21), d'une liaison vissée ou d'une liaison par sertissage.

4. Accumulateur au lithium-ion qui comprend un empilement (12) d'éléments accumulateurs au lithium-ion comportant une surface de couverture (14), une surface de base (15) opposée à la surface de couverture (14) ainsi qu'une surface enveloppante (16) ayant quatre surfaces latérales (17) composées d'au moins deux éléments accumulateurs au lithium-ion (11) de forme prismatique, dans lequel au moins une bande de traction tendue (20), dont les extrémités (22) sont reliées ensemble à l'aide d'une ou deux plaques (18, 19) qui sont respectivement disposées sur une surface latérale (17) ou sur deux surfaces latérales (17) opposées de la surface enveloppante (16), est placée dans la zone de la surface enveloppante (16), dans lequel aucune plaque (18, 19) n'est placée sur une surface latérale libre (17), dans lequel une ouverture traversante (23) se situe dans la zone des extrémités (22) de ladite au moins une bande de traction (20),
**caractérisé en ce que** ladite ouverture traversante (23) respective de ladite au moins une bande de traction (20) est disposée sur une partie de ladite au moins une bande de traction (20) qui est adjacente à une surface libre (17).

5. Accumulateur au lithium-ion selon la revendication 4, dans lequel la liaison des extrémités (22) de la bande de traction (20) est une liaison soudée (21), une liaison vissée ou une liaison par sertissage.

6. Accumulateur au lithium-ion selon la revendication 4 ou 5, dans lequel des écarteurs soulèvent ladite au moins une bande de traction (20) au moins au niveau du point de liaison de la surface enveloppante (16) de l'empilement (12) d'éléments accumulateurs au lithium-ion.

7. Accumulateur au lithium-ion selon la revendication 5 ou 6, dans lequel la bande de traction (20) est reliée au moins au niveau de ses extrémités (22) à la plaque (18, 19) ou aux plaques (18, 19).

8. Accumulateur au lithium-ion selon l'une des revendications 5 à 8, dans lequel l'empilement (12) d'éléments accumulateurs au lithium-ion comprend six éléments accumulateurs au lithium-ion (11).

9. Véhicule automobile comportant un moteur d'entraînement électrique destiné à entraîner le véhicule automobile et un accumulateur au lithium-ion (10) selon l'une des revendications 4 à 8, qui est relié ou peut être relié au moteur d'entraînement électrique.
